# EUROPEAN PATENT SPECIFICATION

(11) **EP 4 535 117 B1**
(45) Date of publication and mention of the grant of the patent: **04.03.2026**
(21) Application number: 24202522.9
(22) Date of filing: 25.09.2024
(51) Int. Cl.: G05D 1/227, G05D 1/222, G05D 1/225, G05D 109/10, G05D 105/45, G05D 107/70

(54) **CONTROLLER**
STEUERUNG
CONTRÔLEUR

(30) Priority: 05.10.2023 JP 2023173473
(43) Date of publication of application: 09.04.2025
(73) Proprietor: TOYOTA JIDOSHA KABUSHIKI KAISHA, Aichi-ken, 471-8571 (JP)
(72) Inventor: YASUYAMA, Shogo, Toyota-shi, 471-8571 (JP); IWAHORI, Kento, Toyota-shi, 471-8571 (JP); YOKOYAMA, Daiki, Toyota-shi, 471-8571 (JP); IKEDA, Keigo, Toyota-shi, 471-8571 (JP); SAITO, Yasuhiro, Kariya-shi, 448-0002 (JP)
(74) Representative: J A Kemp LLP

(56) References cited:
- US-A1- 2019 137 999
- US-A1- 2022 221 855
- US-A1- 2023 256 998

## Description

### BACKGROUND OF THE INVENTION

### 1. Field of the Invention

The disclosure relates to a controller.

### 2. Description of Related Art

Japanese Unexamined Patent Application Publication (Translation of PCT Application) No. 2017-538619 (JP 2017-538619 A) describes a self-driving vehicle with remote control. US 2023/256998, US 2022/221855 and US 2019/137999 disclose various systems and methods associated with autonomous driving.

### SUMMARY OF THE INVENTION

When a malfunction occurs in a movable object, such as a vehicle traveling in self-driving and, as a result, the movable object stops, self-driving is stopped, and an operator is allowed to remotely perform driving operation of the movable object by operating an input device to cause the movable object to travel. However, there is a case where it is desirable to resume self-driving of the movable object. There has been desired a technology for determining to select one of remote driving operation by an operator and resuming self-driving. According to the invention, there is provided a controller as defined in appended claim 1.

The disclosure may be implemented as the following aspect.

An aspect of the disclosure provides a controller that controls an operation of a movable object that is able to travel in self-driving. The controller includes a detecting unit configured to, when the movable object is traveling in self-driving, detect occurrence of an abnormal state including an abnormal stop of the movable object, and a control unit. When (i) occurrence of the abnormal state is detected and (ii) a predetermined first condition is satisfied, the control unit is configured to execute control to resume the self-driving of the movable object. When (i) occurrence of the abnormal state is detected and (ii) the first condition is not satisfied, the control unit is configured not to execute control to resume the self-driving. With the controller according to this aspect, it is easy to determine whether a resumption of self-driving is allowed to be selected.

In the controller according to the aspect of the disclosure, the movable object has a manned driving mode, a remote manual driving mode, and a remote self-driving mode. The manned driving mode is a driving mode in which the movable object travels when a driver in the movable object operates a driver input device provided in the movable object. The remote manual driving mode is a driving mode in which the movable object travels by receiving a traveling condition without the driver in the movable object. The traveling condition is a condition generated when an operator operates an operator input device provided in a place different from a place where the movable object is, and the traveling condition defines a traveling behavior of the movable object. The remote self-driving mode is a driving mode in which the movable object travels, by receiving the traveling condition generated by the controller, without operating any of the driver input device and the operator input device. When (i) occurrence of the abnormal state is detected and (ii) the first condition is satisfied, the control unit is configured to execute control to resume the self-driving while the driving mode of the movable object remains in the remote self-driving mode. When (i) occurrence of the abnormal state is detected and (ii) the first condition is not satisfied, the control unit is configured not to execute control to resume the self-driving in the remote self-driving mode. With the controller according to this aspect, it is easy to determine whether a resumption of self-driving in the remote self-driving mode is allowed to be selected.

In the controller according to the aspect of the disclosure, when (i) occurrence of the abnormal state is detected, (ii) the first condition is not satisfied, and (iii) a predetermined second condition is satisfied, the control unit is configured to switch the driving mode of the movable object from the remote self-driving mode to the remote manual driving mode. With the controller according to this aspect, it is easy to determine whether it is allowed to switch from the remote self-driving mode to the remote manual driving mode.

In the controller according to the aspect of the disclosure, the first condition includes a condition that a period of time required to resume the self-driving is shorter than or equal to a predetermined time limit. With the controller according to this aspect, it is possible to easily determine whether a resumption of self-driving in the remote self-driving mode is allowed to be selected, based on a period of time required to resume the self-driving.

In the controller according to the aspect of the disclosure, the second condition may include a condition that a period of time required to resume the self-driving exceeds the time limit. With the controller according to this aspect, when a period of time is required to resume self-driving, a resumption of the self-driving is not selected. It is possible to easily determine whether it is allowed to switch from self-driving to remote manual control, according to a state of the movable object.

The disclosure may be implemented in various modes and may be implemented in modes, for example, a remote operating system, a remote controller, a movable object controller.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram that shows the configuration of a remote operating system according to a first embodiment;
FIG. 2 is a schematic block diagram that shows the outline of a movable object;
FIG. 3 is a schematic block diagram that shows the outline of a remote operating apparatus;
FIG. 4A is a flowchart that shows a traveling method for a vehicle, implemented by the remote controller;
FIG. 4B is a flowchart that shows a determining process as to switching of a driving mode;
FIG. 5 is a diagram that shows the configuration of a remote operating system according to a second embodiment;
FIG. 6 is a flowchart that shows a determining process as to switching of a driving mode according to the second embodiment;
FIG. 7 is a block diagram that shows the functional configuration of a movable object capable of traveling in an autonomous driving mode; and
FIG. 8 is a flowchart that shows a traveling method for a movable object in which the autonomous driving mode is set.

### DETAILED DESCRIPTION OF EMBODIMENTS

### A. First Embodiment

### A1. Configuration of Remote Operating System

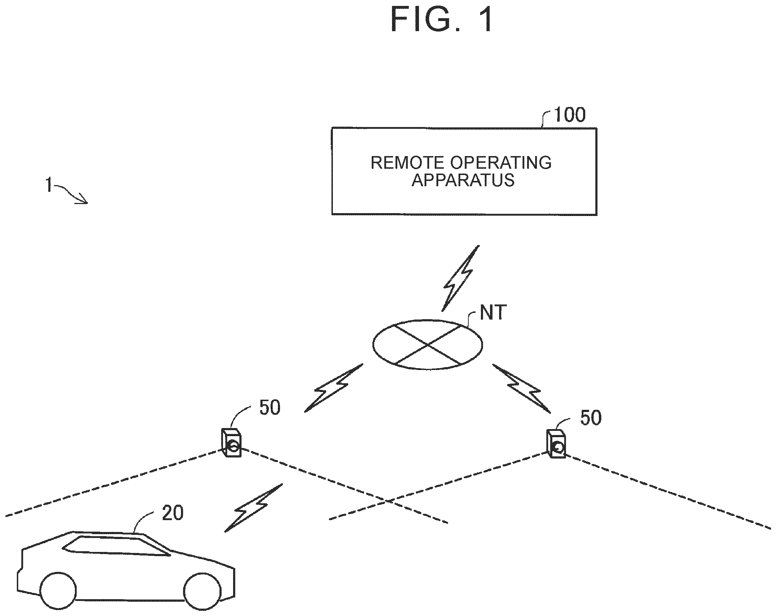

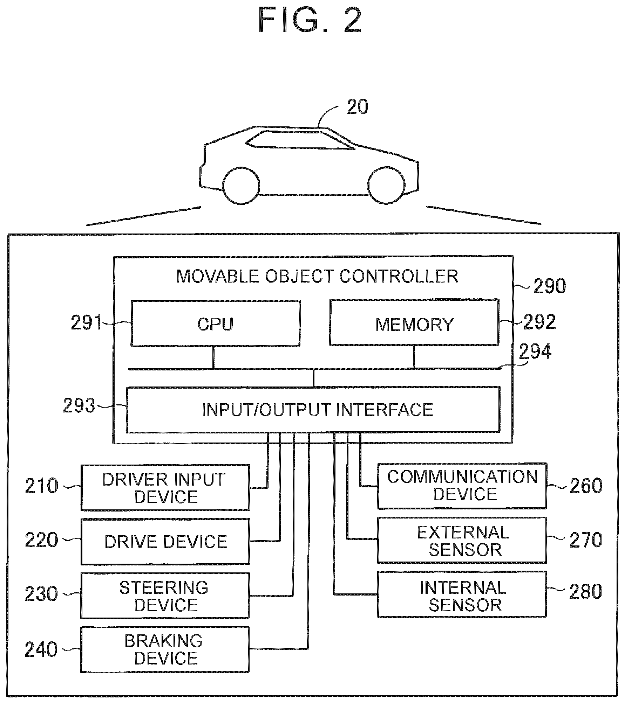

FIG. 1 is a diagram that shows the configuration of a remote operating system 1 according to a first embodiment. FIG. 2 is a schematic block diagram that shows the outline of a movable object 20. The remote operating system 1 shown in FIG. 1 is used in a factory that produces the movable object 20. A target to be controlled by the remote operating system 1 is the movable object 20 capable of traveling by remote operation. The remote operating system 1 is used in a manufacturing process for a movable object, including an assembling step, an inspection step, and the like for the movable object 20. The remote operating system 1 conveys the movable object 20 over a predetermined conveyance section in the manufacturing process. The movable object 20 in conveyance is subjected to handling, such as assembling and inspection, by a worker or equipment.

In the present embodiment, the movable object 20 is a battery electric vehicle (BEV) capable of traveling in self-driving. The term "unmanned driving" means driving not by driving operation of a driver in the movable object 20. Driving operation means operation related to at least any one of "travel", "turn", and "stop" of a vehicle. Self-driving is implemented by self or manual remote control using an apparatus provided outside the movable object 20 or autonomous control of the movable object 20. A person who does not perform driving operation may be in the movable object 20 traveling in self-driving. Examples of the person who does not perform driving operation include a person simply seated on a seat of the movable object 20, and a person who is doing work different from driving operation, that is, assembling, inspection, or operating switches, while being in the movable object 20. Driving by driving operation of a driver in the movable object 20 may be referred to as "manned driving".

The remote operating system 1 includes at least one movable object 20, a plurality of detecting devices 50, and a remote operating apparatus 100.

The movable object 20 travels in any one of a manned driving mode, a remote manual driving mode, and a remote self-driving mode.

The manned driving mode is a driving mode in which the movable object 20 travels in accordance with driving operation of a driver in the movable object 20. When the manned driving mode is set, the driver in the movable object 20 operates a driver input device 210 (see FIG. 2) provided in the movable object 20 to determine the traveling condition of the movable object 20. The driver input device 210 includes a steering wheel, an accelerator pedal, a brake pedal, and the like (not shown). The movable object 20 adopts a steer-by-wire system, a throttle-by-wire system, and a brake-by-wire system. The movable object 20 travels in accordance with the determined traveling condition. The traveling condition defines the traveling behavior of the movable object 20. The traveling condition includes, for example, travel speed, acceleration, and the steering angle of wheels.

The remote manual driving mode is a driving mode in which travel of the movable object 20 is remotely controlled by driving operation of an operator not in the movable object 20. When the remote manual driving mode is set, the traveling condition is generated by the remote operating apparatus 100 (described later) according to operation by the operator to an operator input device (described later). The remote operating apparatus 100 is provided in a place different from a place where the movable object 20 is. Travel of the movable object 20 is controlled in accordance with the traveling condition generated by the remote operating apparatus 100. In the remote manual driving mode, the driver in the movable object 20 does not need to operate a driving input device provided in the movable object 20 in order to cause the movable object 20 to travel.

The remote self-driving mode is a driving mode in which travel of the movable object 20 is controlled in accordance with the traveling condition generated by the remote operating apparatus 100. When the remote self-driving mode is set, the traveling condition is generated by the remote operating apparatus 100 without operation by the operator to the operator input device. In the remote self-driving mode, neither operation of the driving input device by the driver nor operation of the operator input device by the operator not in the movable object 20 is needed. Driving of the movable object 20 in the remote self-driving mode is self-driving. The term "self-driving" means that a system, not a driver, performs all of recognition, prediction, judgement, and operation concerned with driving operation instead and autonomously causes the movable object 20 to travel.

As shown in FIG. 2, the movable object 20 includes the driver input device 210, a drive device 220 for driving the movable object 20, a steering device 230 for changing the traveling direction of the movable object 20, a braking device 240 for braking the movable object 20, a communication device 260, an external sensor 270, an internal sensor 280, and a movable object controller 290 for controlling the devices of the movable object 20. In the present embodiment, the drive device 220 includes a battery, a drive motor that is driven by electric power of the battery, and drive wheels that are rotated by the drive motor.

The communication device 260 is a device for communicating with the remote operating apparatus 100 (see FIG. 1) by wireless communication. The communication device 260 communicates with devices outside the movable object 20 by, for example, controller area network (CAN) communication. CAN communication is a communication standard with which transmission or reception is possible in many directions. The communication device 260 of the movable object 20, for example, communicates with the remote operating apparatus 100 connected to a network NT via an access point (not shown) in a factory.

The external sensor 270 shown in FIG. 2 includes a plurality of sensors for detecting a situation around the movable object 20. The external sensor 270 includes a camera mounted on the movable object 20, a millimeter-wave radar, a LiDAR, an ultrasonic sensor, and the like. The onboard camera captures the image of at least part of a region around the movable object 20. The radar detects a distance, relative angle, relative speed, and the like with respect to an object present in the region around the movable object 20. The LiDAR detects a distance and a relative angle with respect to an object in the region around the movable object 20, the shape of the object, and the like. Each of the sensors outputs a detected value to the movable object controller 290.

The internal sensor 280 includes a plurality of sensors for detecting the internal state of the movable object 20. For example, the internal sensor 280 includes a current sensor, a voltage sensor, a battery temperature sensor, a vehicle speed sensor, an acceleration sensor, a yaw rate sensor, a steering angle sensor, a global navigation satellite system (GNSS) receiver, and the like mounted on the movable object 20. The current sensor detects an output current value of the battery of the movable object 20. The voltage sensor detects an output voltage value of the battery of the movable object 20. The battery temperature sensor detects a temperature of the battery of the movable object 20. The vehicle speed sensor detects a speed of the movable object 20. The acceleration sensor detects an acceleration of the movable object 20. The yaw rate sensor detects a yaw-axis angular velocity (yaw rate) of the movable object 20. The steering angle sensor detects a steering angle of each of the wheels of the movable object 20. The GNSS receiver receives GNSS information. Each of the sensors outputs a detected value to the movable object controller 290.

The movable object controller 290 is a computer including a central processing unit (CPU) 291, a memory 292, an input/output interface 293, and an internal bus 294. The movable object controller 290 is made up of, for example, one or two or more electronic control units (ECUs).

The CPU 291, the memory 292, and the input/output interface 293 are connected via the internal bus 294 such that communication is bidirectionally possible. The driver input device 210, the drive device 220, the steering device 230, the braking device 240, the communication device 260, the external sensor 270, and the internal sensor 280 are connected to the input/output interface 293. Various programs and data are stored in the memory 292. The CPU 291 controls the devices of the movable object 20 by running the programs stored in the memory 292.

In the present embodiment, the movable object controller 290 is capable of causing the movable object 20 to travel by controlling the devices of the movable object 20 in response to driving operation using the driver input device 210 of a driver in the movable object 20 while the manned driving mode is set. The movable object controller 290 causes the movable object 20 to travel by controlling the devices of the movable object 20 in response to a control instruction received from the remote operating apparatus 100 while the remote manual driving mode or the remote self-driving mode is set.

The movable object controller 290 transmits information detected by the external sensor 270 to the remote operating apparatus 100 via the communication device 260 as movable object sensor information. The movable object controller 290 transmits information detected by the internal sensor 280 to the remote operating apparatus 100 via the communication device 260 as movable object state information.

The detecting devices 50 shown in FIG. 1 are used to monitor the movable object 20 that moves in an area of the factory. The detecting devices 50 are, for example, cameras installed in the area of the factory. The locations and orientations of the detecting devices 50 are adjusted in advance. Each of the detecting devices 50, for example, communicates with the remote operating apparatus 100 connected to the network via an access point (not shown) in the factory. The detecting device 50 transmits, to the remote operating apparatus 100, external image capture information acquired by capturing the image of an image capturing range. The external image capture information is, for example, video data acquired by the detecting device 50.

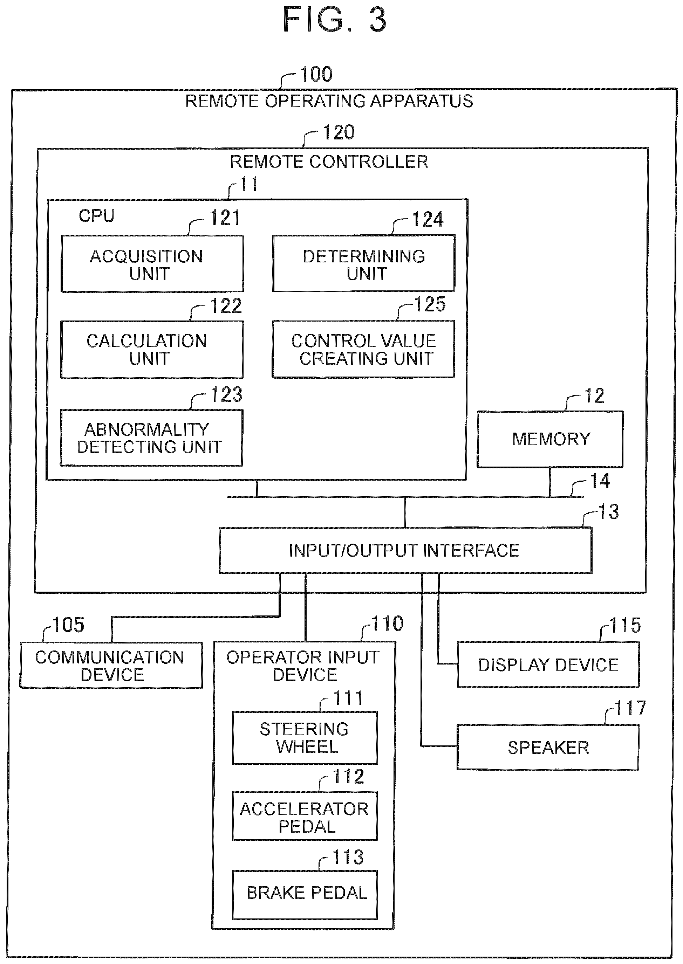

FIG. 3 is a schematic block diagram that shows the outline of the remote operating apparatus 100. The remote operating apparatus 100 is an apparatus for remotely operating travel of the movable object 20.

The remote operating apparatus 100 includes a communication device 105, an operator input device 110, a display device 115, a speaker 117, and a remote controller 120. The remote controller 120 is also referred to as controller.

The communication device 105 connects the remote controller 120 with the movable object 20 and the detecting devices 50 such that communication is possible. The communication device 105 is, for example, a wireless communication device.

The operator input device 110 remotely operates the movable object 20 in which the remote manual driving mode is set, so the operator input device 110 is a device that the operator operates. The operator input device 110 is provided in a place different from a place where the movable object 20 is and is connected to the remote controller 120. The operator input device 110 includes a steering wheel 111 that is an input device for steering the movable object 20 by remote operation, an accelerator pedal 112 that is an input device for accelerating the movable object 20 by remote operation, and a brake pedal 113 that is an input device for decelerating the movable object 20 by remote operation.

The display device 115 displays an image representing various pieces of information in accordance with control of the remote controller 120. The display device 115 is installed at a visually recognizable location where the operator taking a position and a posture in which the operator is able to operate the operator input device 110. For example, the display device 115 displays internal image capture information acquired by the onboard camera and external image capture information acquired by the detecting devices 50.

The speaker 117 reproduces voice data in accordance with control of the remote controller 120. For example, the speaker 117 reproduces voice data acquired by a microphone (not shown) attached to the onboard camera mounted on the movable object 20. Voice data is included in internal image capture information acquired by the onboard camera. The speaker 117 reproduces voice data acquired by a microphone (not shown) attached to the camera that is the detecting device 50. Voice data is included in external image capture information acquired by the detecting devices 50.

The remote controller 120 is a device for remotely controlling travel of the movable object 20.

While the remote manual driving mode is set in the movable object 20, the operator operates the operator input device 110 in order to cause the movable object 20 to travel. The remote controller 120 generates a control instruction according to driving operation of the operator and transmits the control instruction to the movable object 20. The movable object 20 travels in accordance with the control instruction received from the remote controller 120.

While the remote self-driving mode is set, the remote controller 120 generates a control instruction by using detected values and the like from various sensors. The movable object 20 travels in accordance with the control instruction received from the remote controller 120.

The remote controller 120 is a computer including a CPU 11, a memory 12, an input/output interface 13, and an internal bus 14.

The CPU 11, the memory 12, and the input/output interface 13 are connected via the internal bus 14 such that communication is bidirectionally possible. The communication device 105, the operator input device 110, the display device 115, and the speaker 117 are connected to the input/output interface 13. Various programs and data are stored in the memory 12. In the present embodiment, information on a scheduled route of the movable object 20 is stored in the memory 12. The scheduled route is a preset route along which the movable object 20 is going to travel. The CPU 11 implements various functions, that is, an acquisition unit 121, a calculation unit 122, an abnormality detecting unit 123, a determining unit 124, and a control value creating unit 125 by running the programs stored in the memory 12.

The acquisition unit 121 acquires movable object sensor information and movable object state information from the movable object 20. The acquisition unit 121 acquires external image capture information from the detecting devices 50.

The calculation unit 122 calculates the location and orientation of the movable object 20. For example, the location of the movable object 20 and the orientation of the movable object 20 may be estimated by using external image capture information. The location of the movable object 20 can be acquired by, for example, calculating the coordinates of a measuring point of the movable object 20 in an image coordinate system by using the outer shape of the movable object 20, detected from the external image capture information, and converting the calculated coordinates to coordinates in a global coordinate system.

The orientation of the movable object 20 can be estimated based on, for example, the orientation of a motion vector of the movable object 20, calculated by using an optical-flow technique. In the optical-flow technique, the orientation of a motion vector of the movable object 20 is calculated from a change in the locations of feature points of the movable object between frames of captured images. Alternatively, the orientation of the movable object 20 may be calculated by using a detected value of the yaw rate sensor mounted on the movable object 20.

The outer shape of the movable object 20 can be detected by, for example, inputting a captured image to a detection model using artificial intelligence. Examples of the detection model include a trained machine learning model trained so as to implement any one of semantic segmentation and instance segmentation. For example, a convolutional neural network (hereinafter, CNN) trained by supervised learning using a training data set may be used as the machine learning model. The training data set has a plurality of training images each including a movable object, and correct labels each indicating whether a region in a training image is a region representing a movable object or a region representing an object other than the movable object. During training of CNN, parameters of CNN are preferably updated such that errors between output results from the detection model and correct labels are reduced by backpropagation.

The abnormality detecting unit 123 detects occurrence of an abnormal state in the movable object 20. The abnormality detecting unit 123 is also referred to as detecting unit. In the present embodiment, when the movable object 20 in which the remote self-driving mode is set is traveling, the abnormality detecting unit 123 detects occurrence of an abnormal state in the movable object 20 by using movable object sensor information and movable object state information of the movable object 20, external image capture information, information indicating a communication status between the remote operating apparatus 100 and the movable object 20, and the like. The abnormal state in the movable object 20 means that the movable object 20 in which the remote self-driving mode is set makes an abnormal stop. An abnormal stop means an unintended stop of the movable object 20 being remotely operated in the remote self-driving mode.

When the movable object 20 in which the remote self-driving mode is set makes an abnormal stop, the determining unit 124 determines whether to resume self-driving in the remote self-driving mode or switch from the remote self-driving mode to the remote manual driving mode.

When the movable object 20 in which the remote self-driving mode is set makes an abnormal stop, any one of the following handlings is performed. Handlings to be performed include (i) switching into the remote manual driving mode and remotely operating driving of the movable object 20 by driving operation of an operator, (ii) resuming self-driving in the remote self-driving mode, and (iii) a worker gets into the movable object 20 and the worker drives the movable object 20.

In the embodiment, when a first condition is satisfied, the determining unit 124 determines to resume self-driving of the movable object 20 in the remote self-driving mode. The first condition is a condition determined in relation to a resumption of self-driving in the remote self-driving mode. When the determining unit 124 determines to resume self-driving of the movable object 20 in the remote self-driving mode, switching of the driving mode is not performed. On the other hand, when the first condition is not satisfied, the determining unit 124 determines to switch from the remote self-driving mode to the remote manual driving mode. The details of the first condition in relation to a resumption of self-driving in the remote self-driving mode will be described later.

The determining unit 124 transmits notification on switching of the driving mode to the control value creating unit 125 according to a determination result as to whether to resume self-driving in the remote self-driving mode.

The control value creating unit 125 generates a control instruction for remotely controlling the movable object 20 in which the remote self-driving mode is set. The control value creating unit 125 is also referred to as control unit. The control value creating unit 125 generates a control instruction on the movable object 20 by using the location and orientation of the movable object 20, calculated by the calculation unit 122, and transmits the control instruction to the movable object 20. For example, a control instruction is generated as control values indicating an acceleration and a steering angle. The control value creating unit 125 transmits a control instruction according to operator's driving operation to the movable object 20 in order to control the movable object 20 in which the remote manual driving mode is set.

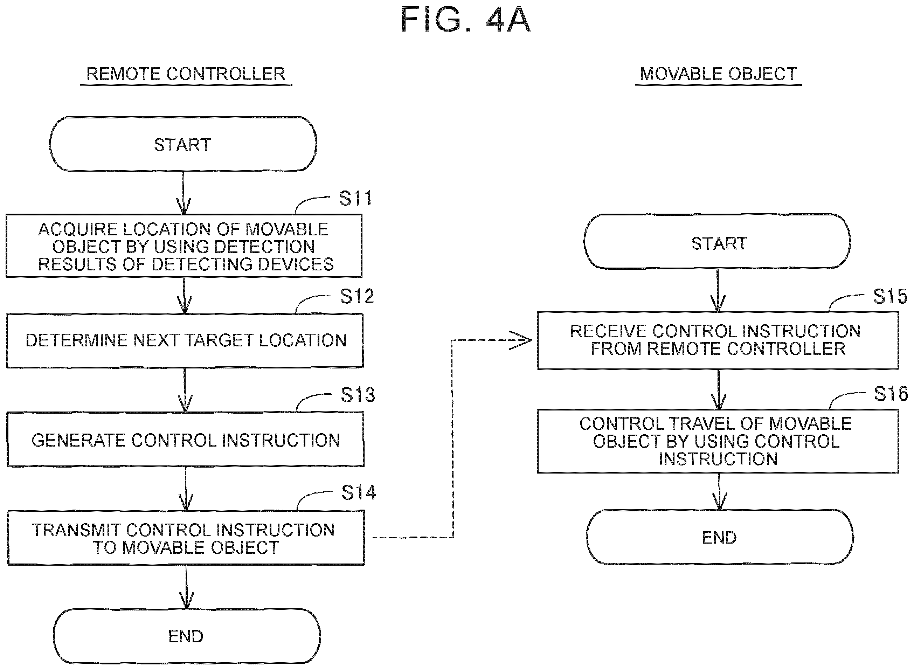

FIG. 4A is a flowchart that shows a method in which the remote controller 120 travels the movable object 20 in which the remote self-driving mode is set. The remote controller 120 acquires the location of the movable object 20 by using detection results of the detecting devices 50 (step S11). Specifically, the calculation unit 122 calculates the location of the movable object 20 by using external image capture information acquired from the detecting devices 50 by the acquisition unit 121. The control value creating unit 125 acquires information on the location of the movable object 20, calculated by the calculation unit 122. The information on the location of the movable object 20 includes coordinates of X, Y, and Z in the global coordinate system of the factory.

The control value creating unit 125 determines a target location for which the movable object 20 is to head next (step S12). In the present embodiment, a target location is expressed by coordinates of X, Y, and Z in the global coordinate system of the factory. Information on the scheduled route that is a route along which the movable object 20 is going to travel is stored in advance in the memory 12 of the remote controller 120. A scheduled route is expressed by a node indicating a departure place, a node indicating a way point, a node indicating a destination, and links each connecting the nodes. The control value creating unit 125 determines a target location for which the movable object 20 is going to head next by using the location of the movable object 20 and the scheduled route. The control value creating unit 125 determines a target location on the scheduled route ahead of a current location of the movable object 20.

The control value creating unit 125 generates a control instruction for causing the movable object 20 to travel toward the determined target location (step S13). In the present embodiment, a control instruction includes the acceleration and steering angle of the movable object 20 as parameters. The control value creating unit 125 calculates the travel speed of the movable object 20 from changes in the location of the movable object 20 and compares the calculated travel speed with a predetermined target speed of the movable object 20. When the travel speed is lower than the target speed, the control value creating unit 125 determines the acceleration such that the movable object 20 accelerates. When the travel speed is higher than the target speed, the control value creating unit 125 determines the acceleration such that the movable object 20 decelerates. When the movable object 20 is located on the scheduled route, the control value creating unit 125 determines the steering angle such that the movable object 20 does not deviates from the scheduled route. When the movable object 20 is not located on the scheduled route, in other words, when the movable object 20 deviates from the scheduled route, the control value creating unit 125 determines the steering angle such that the movable object 20 returns to the scheduled route.

The control value creating unit 125 transmits the generated control instruction to the movable object 20 (step S14). The control value creating unit 125 repeats acquiring the location of the movable object 20, determining a target location, generating a control instruction, and transmitting the control instruction at predetermined intervals.

The movable object controller 290 mounted on the movable object 20 receives the control instruction from the remote controller 120 (step S15) and controls the drive device 220, the steering device 230, and the braking device 240 by using the received control instruction to cause the movable object 20 to travel at the acceleration and the steering angle, indicated by the control instruction (step S16). The movable object controller 290 repeats reception of a control instruction and control related to travel of the movable object 20 at predetermined intervals. When the movable object 20 is caused to travel by remote control, it is possible to move the movable object 20 without using conveyance equipment, such as a crane and a conveyor.

In the present embodiment, when the control value creating unit 125 receives notification from the determining unit 124 that the driving mode is not switched, the control value creating unit 125 executes control to resume self-driving of the movable object 20 in the remote self-driving mode in the area of the factory while the driving mode remains in the remote self-driving mode. On the other hand, when the control value creating unit 125 receives notification from the determining unit 124 that the driving mode is switched to the remote manual driving mode, the control value creating unit 125 executes control over the movable object 20 to switch from the remote self-driving mode to the remote manual driving mode. In this case, control to resume self-driving of the movable object 20 in the remote self-driving mode in the area of the factory is not executed. As a result, self-driving of the movable object 20 in the remote manual driving mode is started.

### A2. First Condition

At least condition 1 below is adopted as the first condition. Two or more of the conditions listed below may be selected as the first condition.

### <Condition 1>

A period of time required to resume self-driving is shorter than or equal to a predetermined time limit.

### <Condition 2>

A total number of the movable object 20 and another movable object in which an abnormal state is occurring is less than or equal to a predetermined value M (M is an integer greater than or equal to two).

### <Condition 3>

A total number of the movable object 20 and another movable object traveling in self-driving is less than or equal to a predetermined value N (N is an integer greater than or equal to two).

### <Condition 4>

The current location of the movable object 20, that is, the location where the movable object 20 is stopped, is in a region where another movable object traveling in self-driving stops at a low frequency.

### <Condition 5>

When the movable object 20 is off the scheduled route, a distance from the scheduled route to the movable object 20 is shorter than or equal to a predetermined distance.

### <Condition 6>

The current location of the movable object 20, that is, the location at which the movable object 20 is stopped, is in a region where an operator taking a position and a posture in which the operator is able to operate an operator input device is able to recognize the movable object 20.

### <Condition 7>

The yaw rate sensor mounted on the movable object 20 has not broken down.

### <Condition 8>

The movable object 20 does not need to travel off the set scheduled route.

### <Condition 9>

The weather around the movable object 20 is not a bad weather.

### <Condition 10>

A line with which the movable object 20 communicates with the remote operating apparatus 100 is established.

### A3. Condition 1

When a period of time required to resume self-driving in the remote self-driving mode of the movable object 20 is shorter than or equal to the predetermined time limit, it is efficient to select a resumption of self-driving in the remote self-driving mode, not in the remote manual driving mode. To switch the driving mode to the remote manual driving mode and remotely operate the movable object 20 by operation of an operator, the operator needs to move to a place where the operator input device is installed and take a posture in which the operator is able to operate the operator input device. On the other hand, when a period of time required to resume self-driving in the remote self-driving mode of the movable object 20 is longer than the time limit, self-driving in the remote manual driving mode or driving by a worker in the movable object 20 is efficient. Thus, the remote controller 120 is capable of easily determining whether a resumption of self-driving in the remote self-driving mode is allowed to be selected, based on whether Condition 1 is satisfied.

According to condition 1, the remote controller 120 predicts a period of time required to resume self-driving in the remote self-driving mode of the movable object 20 by using movable object sensor information and movable object state information, acquired by the movable object 20.

### A4. Condition 2

When the movable object 20 makes an abnormal stop, there can be a situation in which another movable object traveling in the remote self-driving mode in the area of the factory also makes an abnormal stop. In such a case, when the remote controller 120 sequentially executes a process of resuming self-driving of the movable object 20 in the remote self-driving mode and a process of resuming self-driving in the remote self-driving mode of another movable object, any one of the movable objects stops at the current location for a while. As a result, this may, for example, influence travel of another movable object not in an abnormal stop. By using Condition 2, it is determined whether to select a resumption of self-driving in the remote self-driving mode, in consideration of influence on travel of another movable object. Thus, the remote controller 120 is capable of easily determining whether a resumption of self-driving in the remote self-driving mode is allowed to be selected, based on whether Condition 2 is satisfied.

When Condition 2 is used, the remote controller 120 predicts a total number of the movable object 20 and another movable object in which an abnormal state is occurring by using external image capture information, movable object sensor information and movable object state information acquired by the movable object 20, and movable object sensor information and movable object state information acquired by the another movable object.

### A5. Condition 3

Since a certain period of time is required to resume self-driving of the movable object 20 in the remote self-driving mode, the movable object 20 stops at the current location for a while. When another movable object other than the movable object 20 is traveling in the remote self-driving mode in the area of the factory, a stop of the movable object 20 may influence travel of the another movable object. By using Condition 3, it is determined whether it is allowed to select a resumption of self-driving in the remote self-driving mode, in consideration of influence on travel of another movable object. Thus, the remote controller 120 is capable of easily determining whether a resumption of self-driving in the remote self-driving mode is allowed to be selected, based on whether Condition 3 is satisfied.

When Condition 3 is used, the remote controller 120 predicts a total number of the movable object 20 and another movable object traveling in the remote self-driving mode by using external image capture information, movable object sensor information and movable object state information acquired by the movable object 20, and movable object sensor information and movable object state information acquired by the another movable object.

### A6. Condition 4

When the location where the movable object 20 is stopped is in a region where another movable object traveling in the remote self-driving mode stops at a low frequency, influence on the another movable object is small even when a certain period of time is taken to resume self-driving of the movable object 20 in the remote self-driving mode. On the other hand, the location where the movable object 20 is stopped is in a region where another movable object traveling in the remote self-driving mode stops at a high frequency, it is desirable to quickly move the movable object 20 from the current location. The region where another movable object traveling in the remote self-driving mode stops at a high frequency (hereinafter, referred to as avoidance region) is, for example, a certain region including an intersection. This is because the movable object 20 and another movable object make a temporary stop before passing by an intersection. By using Condition 4, it is determined whether it is allowed to select a resumption of self-driving in the remote self-driving mode, in consideration of influence on travel of another movable object. Thus, the remote controller 120 is capable of easily determining whether a resumption of self-driving in the remote self-driving mode is allowed to be selected, based on whether Condition 4 is satisfied.

When Condition 4 is used, the remote controller 120 determines whether the current location of the movable object 20 is in a region where another movable object stops at a low frequency by using movable object sensor information and movable object state information acquired by the movable object 20, external image capture information, and information on a preset avoidance region. Information on an avoidance region is stored in the memory 12 in advance.

### A7. Condition 5

Although the movable object 20 has traveled along a scheduled route set in advance, the movable object 20 can leave the scheduled route for some reasons before an abnormal stop. When a distance from the current location of the movable object 20 to the scheduled route is longer than a predetermined distance, it is difficult for the movable object 20 to return to the scheduled route again even when self-driving in the driving mode is resumed. On the other hand, when a distance from the current location of the movable object 20 to the scheduled route is shorter than or equal to the predetermined distance, it is relatively easy for the movable object 20 to return to the scheduled route again by resuming self-driving in the driving mode. By using Condition 5, it is determined whether to select a resumption of self-driving in the remote self-driving mode, in consideration of ease of resumption of self-driving. Thus, the remote controller 120 is capable of easily determining whether a resumption of self-driving in the remote self-driving mode is allowed to be selected, based on whether Condition 5 is satisfied.

When Condition 5 is used, the remote controller 120 determines whether the current location of the movable object 20 is off the scheduled route, by using information on the scheduled route set for the movable object 20, external image capture information, movable object sensor information, and movable object state information. When the current location of the movable object 20 is off the scheduled route, the remote controller 120 further determines whether a distance from the scheduled route to the movable object 20 is shorter than or equal to a predetermined distance.

### A8. Condition 6

When the current location of the movable object 20 is in a region where the operator is able to recognize the movable object 20, the operator is able to visually recognize the traveling state of the movable object 20 when the movable object 20 resumes self-driving in the remote self-driving mode. Furthermore, after a resumption of self-driving in the remote self-driving mode, even when the driving mode is switched to the remote manual driving mode for some reasons, the operator is able to easily handle the situation. A situation in which the movable object 20 is in a region where the operator taking a position and a posture in which the operator is able to operate the operator input device is able to recognize the movable object 20 means that the movable object 20 is in an image capturing range of the detecting devices 50. When external image capture information captured by the detecting devices 50 is displayed on the display device 115, the operator is able to visually recognize the movable object 20.

By using Condition 6, it is determined whether to select a resumption of self-driving in the remote self-driving mode, in consideration of ease of resumption of self-driving. Thus, the remote controller 120 is capable of easily determining whether a resumption of self-driving in the remote self-driving mode is allowed to be selected, based on whether Condition 6 is satisfied.

When Condition 6 is used, the remote controller 120 determines whether the current location of the movable object 20 is in a region where the operator is able to recognize the movable object 20, by using movable object sensor information and movable object state information acquired by the movable object 20, and information on the installation locations of the detecting devices 50. Information on the installation locations of the detecting devices 50 is stored in the memory 12 in advance.

### A9. Condition 7

When the yaw rate sensor mounted on the movable object 20 has broken down, it is not possible to estimate the orientation of the movable object 20, so self-driving of the movable object 20 is impossible. Thus, the remote controller 120 is capable of easily determining whether a resumption of self-driving in the remote self-driving mode is allowed to be selected, based on whether Condition 7 is satisfied.

When Condition 7 is used, the remote controller 120 determines whether the yaw rate sensor mounted on the movable object 20 has broken down, based on movable object state information acquired by the movable object 20. When, for example, a detected value has not been received from the yaw rate sensor for a certain period of time, the remote controller 120 determines that the yaw rate sensor has broken down.

### A10. Condition 8

For example, in order for another movable object to be stopped on the scheduled route set for the movable object 20, the movable object 20 needs to avoid a collision with the another movable object. Also, because a worker is doing some work on the scheduled route, the movable object 20 needs to avoid a collision with the worker. Such a situation corresponds to a case where the movable object 20 needs to travel off the set scheduled route. When the movable object 20 needs to travel off the set scheduled route, it is expectedly difficult for the movable object 20 to smoothly travel even when the movable object 20 resumes self-driving in the remote self-driving mode.

By using Condition 8, it is determined whether to select a resumption of self-driving in the remote self-driving mode, in consideration of a situation therearound. Thus, the remote controller 120 is capable of easily determining whether a resumption of self-driving in the remote self-driving mode is allowed to be selected, based on whether Condition 8 is satisfied.

When Condition 8 is used, the remote controller 120 determines whether the movable object 20 needs to travel off the scheduled route by using information on the scheduled route set for the movable object 20, external image capture information, and movable object sensor information.

### A11. Condition 9

The movable object 20 can travel outside a building in the area of the factory. In such a case, depending on the weather around the movable object 20, it may be difficult for the movable object 20 to travel after a resumption of self-driving in the remote self-driving mode. By using Condition 9, it is determined whether to select a resumption of self-driving in the remote self-driving mode, in consideration of the degree of difficulty in travel in self-driving after the resumption. Thus, the remote controller 120 is capable of easily determining whether a resumption of self-driving in the remote self-driving mode is allowed to be selected, based on whether Condition 9 is satisfied.

When Condition 9 is used, the remote controller 120 acquires information on the weather at the current location of the movable object 20 from an external server that distributes information on the weather in many places. The remote controller 120 determines whether it is a bad weather, based on the information on the weather. The bad weather is the weather in which self-driving of the movable object 20 in the remote self-driving mode is difficult. For example, the bad weather includes the weather in which it is raining or snowing and the weather in which it is fogging.

### A12. Condition 10

Communication failure on a line with which the movable object 20 communicates with the remote controller 120 can occur. In such a case, the movable object 20 cannot communicate with the remote controller 120, so self-driving of the movable object 20 in the remote self-driving mode is impossible, with the result that the movable object 20 can make an abnormal stop. Thus, the remote controller 120 is capable of easily determining whether a resumption of self-driving in the remote self-driving mode is allowed to be selected, based on whether Condition 10 is satisfied.

### A13. Determining Process as to Switching of Driving Mode

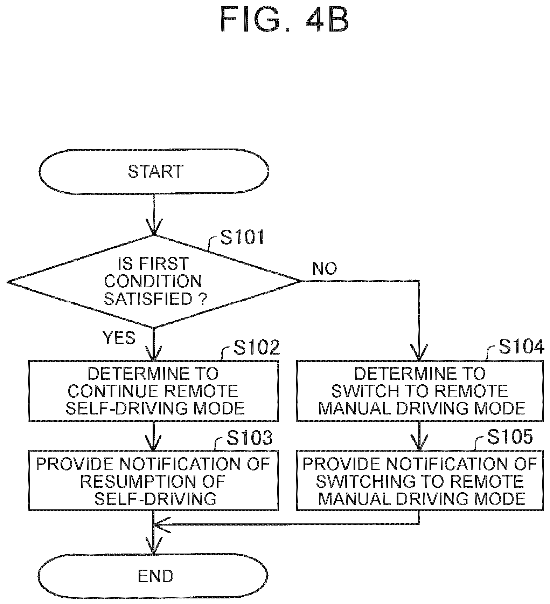

FIG. 4B is a flowchart that shows a determining process as to switching of the driving mode. When the abnormality detecting unit 123 detects occurrence of an abnormal state of the movable object 20 based on movable object sensor information, movable object state information, and external image capture information on the movable object 20, acquired by the acquisition unit 121, the process shown in FIG. 4B is started. Hereinafter, an example in which only the above-described Condition 1 is adopted as the first condition will be described.

In step S101, the determining unit 124 determines whether Condition 1 as the first condition is satisfied.

Specifically, the determining unit 124 predicts a period of time required to resume self-driving of the movable object 20 in the remote self-driving mode by using movable object sensor information and movable object state information acquired by the movable object 20. The determining unit 124 determines that the first condition is satisfied when the predicted period of time required to resume self-driving is shorter than or equal to the predetermined time limit. On the other hand, the determining unit 124 determines that the first condition is not satisfied when the predicted period of time required to resume self-driving is longer than the predetermined time limit.

When the first condition is satisfied (YES in step S101), the determining unit 124 executes the process of step S102. On the other hand, when the first condition is not satisfied (NO in step S101), the determining unit 124 executes the process of step S104.

In step S102, the determining unit 124 determines to continue the remote self-driving mode for the movable object 20. In step S103, the determining unit 124 outputs, to the control value creating unit 125, notification that a resumption of self-driving in the remote self-driving mode is performed. When the control value creating unit 125 receives notification that a resumption of self-driving in the remote self-driving mode is performed, the control value creating unit 125 transmits, to the movable object 20, a control instruction to resume self-driving. Then, the process shown in FIG. 4B is ended.

After that, the control value creating unit 125 remotely controls the movable object 20 in the remote self-driving mode by transmitting a control instruction to the movable object 20 as needed.

In step S104, the determining unit 124 determines to switch from the remote self-driving mode to the remote manual driving mode. In step S105, the determining unit 124 outputs, to the control value creating unit 125, notification that the driving mode is switched from the remote self-driving mode to the remote manual driving mode. When the control value creating unit 125 receives notification that the driving mode is switched from the remote self-driving mode to the remote manual driving mode, the control value creating unit 125 outputs, to the display device 115, the notification that the driving mode is switched to the remote manual driving mode. Then, the process shown in FIG. 4B is ended.

After that, the control value creating unit 125 transmits a control instruction according to driving operation of the operator to the movable object 20 each time the control value creating unit 125 receives input from the operator input device 110. In this way, remote control of the movable object 20 in the remote manual driving mode is performed.

As described above, in the present embodiment, the remote controller 120 is capable of easily determining whether a resumption of self-driving in the remote self-driving mode is allowed to be selected, according to whether the predetermined first condition is satisfied.

### B. Second Embodiment

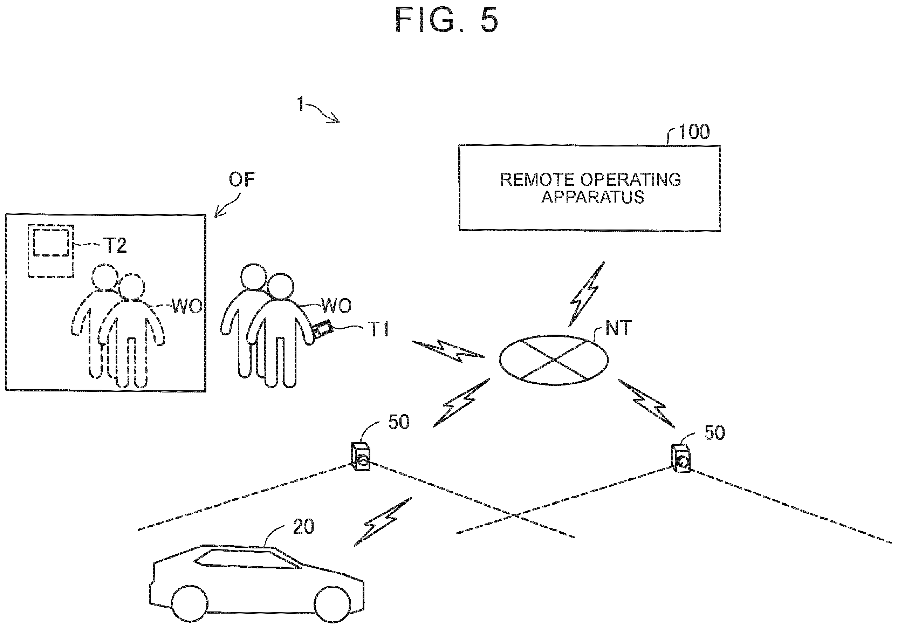

FIG. 5 is a diagram that shows the configuration of a remote operating system 1 according to a second embodiment. Hereinafter, components different from those of the first embodiment will be specifically described. The description of components similar to those of the first embodiment is omitted.

In the second embodiment, to determine whether to switch the driving mode of the movable object 20 from the remote self-driving mode to the remote manual driving mode, a determination as to a second condition is performed in addition to a determination as to the first condition.

When occurrence of an abnormal state of the movable object 20 is detected, the determining unit 124 of the remote controller 120 determines whether the predetermined first condition and the predetermined second condition are satisfied. The second condition is a condition determined in relation to switching to the remote manual driving mode. When the determining unit 124 determines that the first condition is not satisfied and the second condition is satisfied, the determining unit 124 switches the driving mode of the movable object 20 from the remote self-driving mode to the remote manual driving mode. At least one of the conditions listed in the first embodiment may be adopted as the first condition.

When the determining unit 124 determines that the first condition is not satisfied and the second condition is not satisfied, the determining unit 124 determines to switch the driving mode of the movable object 20 from the remote self-driving mode to the manned driving mode. In this case, the determining unit 124 provides notification of an instruction to at least one worker WO in the area of the factory via a terminal device T1 held by the worker WO to collect the movable object 20. The determining unit 124 is also referred to as notification unit. The determining unit 124 is capable of providing notification of an instruction to a worker WO at a waiting location OF via a terminal device T2 installed at the waiting location OF to collect the movable object 20. The waiting location OF is a location where workers WO wait or take a rest.

At least one of the conditions listed below may be adopted as the second condition. Two or more of the conditions listed below may be selected as the second condition.

### <Condition 11>

The operator is taking a position and a posture in which the operator is able to operate the operator input device 110.

### <Condition 13>

A total number of the movable object 20 and another movable object in which an abnormal state is occurring is greater than a predetermined value M (M is an integer greater than or equal to two).

### <Condition 14>

A total number of the movable object 20 and another movable object traveling in self-driving is greater than a predetermined value N (N is an integer greater than or equal to two).

### <Condition 15>

The current location of the movable object 20, that is, the location where the movable object 20 is stopped, is not in a predetermined region.

### <Condition 16>

The yaw rate sensor mounted on the movable object 20 has broken down.

### <Condition 17>

The movable object 20 needs to travel off the set scheduled route.

### <Condition 18>

The weather around the movable object 20 is a bad weather.

### <Condition 19>

A duration of a state where communication between the movable object 20 and the remote operating apparatus 100 is interrupted is longer than or equal to a predetermined period of time.

When the driving mode is switched from the remote self-driving mode to the remote manual driving mode, the operator needs to remotely operate driving of the movable object 20. Thus, by using Condition 11, it is determined whether the operator is taking a position and a posture in which the operator is able to operate the operator input device 110. The remote controller 120 is capable of easily determining whether control of the movable object 20 in the remote manual driving mode is allowed to be selected, based on whether Condition 11 is satisfied.

When Condition 11 is used, the remote controller 120 determines that Condition 11 is satisfied when the remote controller 120 receives input from the operator input device 110 in a predetermined period of time after notification that the driving mode is switched to the remote manual driving mode is output to the display device 115. The remote controller 120 determines that Condition 11 is not satisfied when there is no input from the operator input device 110 in the predetermined period of time after notification that the driving mode is switched to the remote manual driving mode is output to the display device 115.

Condition 13 to Condition 14 are conditions that respectively negate Condition to Condition 3 described in the first embodiment. Condition 16 to Condition 19 are conditions that respectively negate Condition 7 to Condition 10.

The predetermined region of Condition 15 is, for example, a region where another movable object traveling in the remote self-driving mode stops at a low frequency, shown in Condition 4. The predetermined region of Condition 15 may be a region where, when the movable object 20 is off the scheduled route, a distance from the scheduled route to the movable object 20 is shorter than or equal to a predetermined distance, shown in Condition 5. The predetermined region of Condition 15 may be a region where the current location of the movable object 20, that is, the location at which the movable object 20 is stopped, is in a region where the operator taking a position and a posture in which the operator is able to operate the operator input device is able to recognize the movable object 20, shown in Condition 6.

In the present embodiment, whether the driving mode of the movable object 20 is allowed to be switched from the remote self-driving mode to the remote manual driving mode is determined based on non-fulfillment of the first condition and fulfillment of the second condition. Thus, it is assumed that a condition that negates the set first condition is not selected as the second condition. For example, when Condition 2 is set as the first condition, Condition 13 is not selected as the second condition.

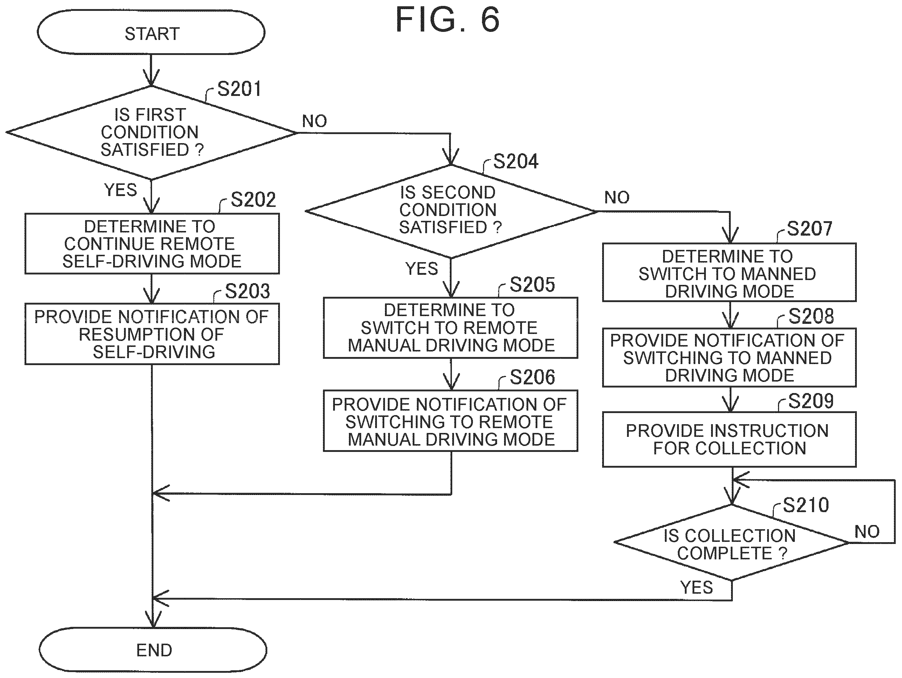

FIG. 6 is a flowchart that shows a determining process as to switching of the driving mode. When the abnormality detecting unit 123 detects occurrence of an abnormal state of the movable object 20 based on movable object sensor information, movable object state information, and external image capture information on the movable object 20, acquired by the acquisition unit 121, the process shown in FIG. 6 is started. Hereinafter, an example in which Condition 7 described in the first embodiment is adopted as the first condition and Condition 11 is adopted as the second condition will be described.

In step S201, the determining unit 124 determines whether Condition 7 as the first condition is satisfied.

The determining unit 124 determines whether the yaw rate sensor mounted on the movable object 20 has broken down, based on the movable object state information acquired by the movable object 20. Specifically, when the determining unit 124 has not received a detected value from the yaw rate sensor for a certain period of time, the determining unit 124 determines that the yaw rate sensor has broken down. In this case, the determining unit 124 determines that the first condition is not satisfied. On the other hand, when the determining unit 124 has been receiving a detected value from the yaw rate sensor, the determining unit 124 determines that the yaw rate sensor has not broken down. In this case, the determining unit 124 determines that the first condition is satisfied.

When the first condition is satisfied (YES in step S201), the determining unit 124 executes the process of step S202. On the other hand, when the first condition is not satisfied (NO in step S201), the determining unit 124 executes the process of step S204.

In step S202, the determining unit 124 determines to continue the remote self-driving mode for the movable object 20. In step S203, the determining unit 124 outputs, to the control value creating unit 125, notification that a resumption of self-driving in the remote self-driving mode is performed. When the control value creating unit 125 receives notification that a resumption of self-driving in the remote self-driving mode is performed, the control value creating unit 125 transmits, to the movable object 20, a control instruction to resume self-driving. Then, the process shown in FIG. 6 is ended.

After that, the control value creating unit 125 remotely controls the movable object 20 in the remote self-driving mode by transmitting a control instruction to the movable object 20 as needed.

In step S204, the determining unit 124 determines whether Condition 11 as the second condition is satisfied.

Specifically, the determining unit 124 outputs, to the control value creating unit 125, notification that the driving mode is switched from the remote self-driving mode to the remote manual driving mode. When the control value creating unit 125 receives notification that the driving mode is switched from the remote self-driving mode to the remote manual driving mode, the control value creating unit 125 outputs an instruction for driving in the remote manual driving mode to the display device 115.

When there is input from the operator input device 110 in a predetermined period of time after the determining unit 124 provides the notification to the control value creating unit 125 in relation to switching of the driving mode, the determining unit 124 determines that the operator is taking a position and a posture in which the operator is able to operate the operator input device 110. In this case, the determining unit 124 determines that the second condition is satisfied. When there is no input from the operator input device 110 in the predetermined period of time after the determining unit 124 provides the notification to the control value creating unit 125 in relation to switching of the driving mode, the determining unit 124 determines that the operator is not taking a position and a posture in which the operator is able to operate the operator input device 110. In this case, the determining unit 124 determines that the second condition is not satisfied.

When the second condition is satisfied (YES in step S204), the determining unit 124 executes the process of step S205. On the other hand, when the second condition is not satisfied (NO in step S204), the determining unit 124 executes the process of step S207.

In step S205, the determining unit 124 determines to switch from the remote self-driving mode to the remote manual driving mode. In step S206, the determining unit 124 outputs, to the control value creating unit 125, notification that the driving mode is switched from the remote self-driving mode to the remote manual driving mode. Then, the process shown in FIG. 6 is ended.

After that, the control value creating unit 125 transmits a control instruction according to driving operation of the operator to the movable object 20 each time the control value creating unit 125 receives input from the operator input device 110. In this way, remote control of the movable object 20 in the remote manual driving mode is performed.

In step S207, the determining unit 124 determines to switch from the remote self-driving mode to the manned driving mode. In step S208, the determining unit 124 outputs, to the control value creating unit 125, notification that the driving mode is switched to the manned driving mode. When the control value creating unit 125 receives notification that the driving mode is switched to the manned driving mode, the control value creating unit 125 outputs the notification that the driving mode is switched to the manned driving mode to the display device 115.

In step S209, the determining unit 124 provides notification of an instruction to at least one worker WO via the terminal device T1 held by the worker WO or the terminal device T2 installed at the waiting location OF to collect the movable object 20. The worker WO having received the notification moves to the location of the movable object 20 and drives to move the movable object 20. In this way, the movable object 20 is collected.

In step S210, the determining unit 124 waits until the determining unit 124 receives notification from the worker WO via the terminal device T1 that collection of the movable object 20 has been completed (NO in step S210). When the determining unit 124 receives notification from the worker WO via the terminal device T1 that collection of the movable object 20 has been completed (YES in step S210), the determining unit 124 ends the process shown in FIG. 6.

As described above, in the present embodiment, as in the case of the first embodiment, the remote controller 120 is capable of easily determining whether a resumption of self-driving in the remote self-driving mode is allowed to be selected, according to whether the predetermined first condition is satisfied.

The remote controller 120 is capable of easily determining whether the driving mode is allowed to be switched from the remote self-driving mode to the remote manual driving mode on condition that the first condition is not satisfied and the second condition is satisfied.

In the present embodiment, initially, it is determined whether a resumption of self-driving in the remote self-driving mode is allowed and then it is determined whether to switch to driving in the remote manual driving mode. The number of operators that remotely operate movable objects 20 is limited; however, when it is preferentially determined whether to resume self-driving, human resources are efficiently managed.

In the present embodiment, when neither self-driving in the remote self-driving mode nor driving in the remote manual driving mode is allowed to be performed, it is possible to quickly proceed with collection of the movable object 20 by providing notification to the worker WO.

### C. Other Embodiments

(C1) In the second embodiment, the remote controller 120 determines whether the first condition is satisfied and then determines whether the second condition is satisfied. However, the remote controller 120 may perform a determination as to the first condition and a determination as to the second condition at the same time.

(C2) In the second embodiment, in Condition 19 as the second condition, it is determined whether the duration of a state where communication between the movable object 20 and the remote controller 120 is interrupted is longer than or equal to a predetermined period of time. Even when Condition 19 is not adopted as the second condition, but when the duration of a state where communication between the movable object 20 and the remote controller 120 is interrupted is longer than or equal to the predetermined period of time, the remote controller 120 may provide notification of the fact via the terminal device T1 and the terminal device T2.

(C3) In the first embodiment, an abnormal stop of the movable object 20 in which the remote self-driving mode is set has been described as an example of the abnormal state of the movable object 20. However, the abnormal state of the movable object 20 is not limited to an abnormal stop of the movable object 20. For example, a situation in which there occurs a failure in a communication line between the remote controller 120 and the movable object 20 or a situation in which there occurs a failure in the remote operating apparatus 100 itself may be determined as occurrence of an abnormal state.

(C4) In the first embodiment, a process from acquisition of location information of the movable object 20 to generation of a control instruction is executed by the remote controller 120. In contrast, at least part of the process from acquisition of location information of the movable object 20 to generation of a control instruction may be executed by the movable object 20. For example, the following modes (1) to (3) are applicable.

(1) The remote controller 120 may acquire location information of the movable object 20, determine a target location for which the movable object 20 is going to head next, and generate a route from a current location of the movable object 20, indicated by the acquired location information, to the target location. The remote controller 120 may generate a route to the target location between the current location and a destination or may generate a route to the destination. The remote controller 120 may transmit the generated route to the movable object 20. The movable object 20 may generate a control instruction such that the movable object 20 travels along the route received from the remote controller 120 and control the drive device 220, the steering device 230, and the braking device 240 by using the generated control instruction.

(2) The remote controller 120 may acquire location information of the movable object 20 and transmit the acquired location information to the movable object 20. The movable object 20 may determine a target location for which the movable object 20 is going to head next, generate a route from the current location of the movable object 20, indicated by the received location information, to the target location, generate a traveling control signal such that the movable object 20 travels along the generated route, and control the drive device 220, the steering device 230, and the braking device 240 by using the generated traveling control signal.

(3) In the above-described modes (1) and (2), a detection result output from at least one of the external sensor 270 and the internal sensor 280, mounted on the movable object 20, may be used for at least one of generation of a route and generation of a control instruction. For example, in the above-described mode (1), the remote controller 120 may acquire a detection result of at least one of the external sensor 270 and the internal sensor 280 and reflect the detection result in a route at the time of generating the route. In the above-described mode (1), the movable object 20 may acquire a detection result of at least one of the external sensor 270 and the internal sensor 280 and reflect the detection result in a control instruction at the time of generating the control instruction. In the above-described mode (2), the movable object 20 may acquire a detection result of at least one of the external sensor 270 and the internal sensor 280 and reflect the detection result in a route at the time of generating the route. In the above-described mode (2), the movable object 20 may acquire a detection result of at least one of the external sensor 270 and the internal sensor 280 and reflect the detection result in a control instruction at the time of generating the control instruction.

(C5) In the first embodiment, an example in which the movable object 20 travels in any one of the manned driving mode, the remote manual driving mode, and the remote self-driving mode has bee described. The movable object 20 may be capable of traveling in an autonomous driving mode in addition to these driving modes. The autonomous driving mode is a driving mode in which travel of the movable object 20 is controlled by autonomous control of the movable object 20. Driving of the movable object 20 in the remote self-driving mode is self-driving.

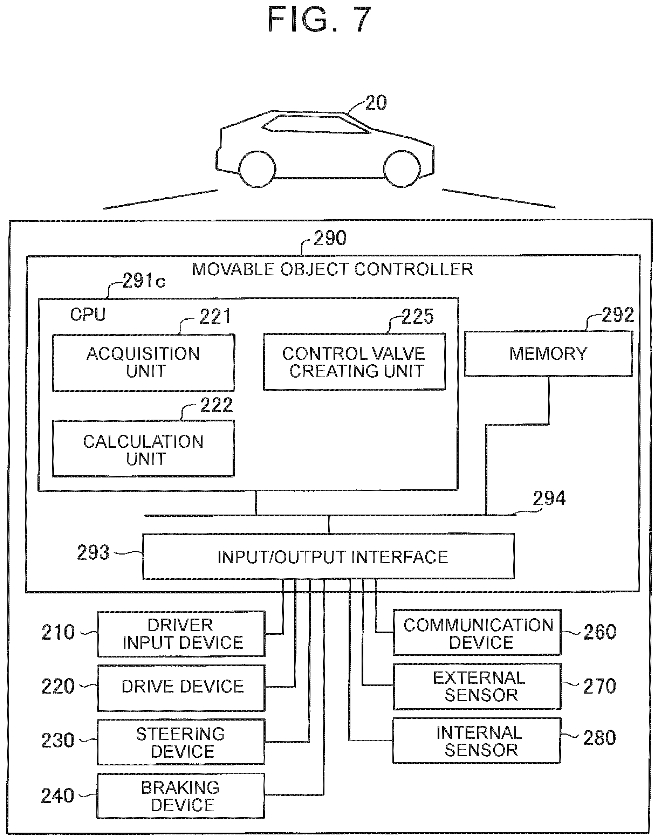

FIG. 7 is a block diagram that shows the functional configuration of the movable object 20 capable of traveling in the autonomous driving mode. The present embodiment differs from the first embodiment in that a movable object controller 290 provided in the movable object 20 has functions as a controller. Hereinafter, components different from those of the first embodiment will be specifically described. The description of components similar to those of the first embodiment is omitted.

Programs for implementing not only the functions of the CPU 291, shown in the first embodiment, but also the functions of the acquisition unit 121, calculation unit 122, and control value creating unit 125 of the remote controller 120 are stored in the memory 292. A CPU 291c functions as an acquisition unit 221, a calculation unit 222, and a control value creating unit 225 corresponding to these functions of the remote controller 120 in the first embodiment by running the programs stored in the memory 292. Information on a scheduled route of the movable object 20 is stored in the memory 292. A scheduled route is expressed by a node indicating a departure place, a node indicating a way point, a node indicating a destination, and links each connecting the nodes.

The acquisition unit 221 acquires movable object sensor information and movable object state information. The acquisition unit 221 acquires external image capture information from the detecting devices 50.

The calculation unit 222 calculates the location and orientation of the movable object 20. For example, the location of the movable object 20 and the orientation of the movable object 20 may be estimated by using the external image capture information. The location of the movable object 20 can be acquired by, for example, calculating the coordinates of a measuring point of the movable object 20 in an image coordinate system by using the outer shape of the movable object 20, detected from the external image capture information, and converting the calculated coordinates to coordinates in a global coordinate system.

The orientation of the movable object 20 can be estimated based on, for example, the orientation of a motion vector of the movable object 20, calculated by using an optical-flow technique. Alternatively, the orientation of the movable object 20 may be calculated by using a detected value of the yaw rate sensor mounted on the movable object 20. The outer shape of the movable object 20 can be detected by, for example, inputting a captured image to a detection model using artificial intelligence.

The control value creating unit 225 determines an acceleration and a steering angle of the movable object 20 by using the location and orientation of the movable object 20, calculated by the calculation unit 222, and causes the movable object 20 to travel at the determined acceleration and steering angle.

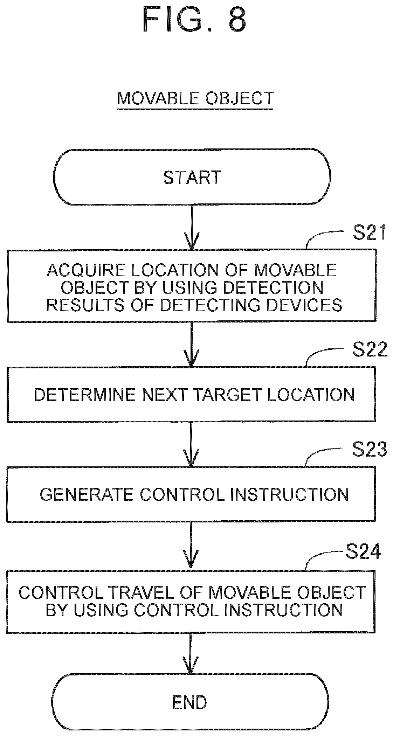

FIG. 8 is a flowchart that shows a traveling method for the movable object 20 in which the autonomous driving mode is set. The calculation unit 222 acquires the location of the movable object 20 by using detection results of the detecting device 50 (step S21). Specifically, the calculation unit 222 calculates the location of the movable object 20 by using external image capture information acquired from the detecting devices 50 by the acquisition unit 221. The information on the location of the movable object 20 includes coordinates of X, Y, and Z in the global coordinate system of the factory.

The control value creating unit 225 determines a target location for which the movable object 20 is going to head next (step S22). In the present embodiment, a target location is expressed by coordinates of X, Y, and Z in the global coordinate system of the factory. The control value creating unit 225 determines a target location for which the movable object 20 is going to head next by using information on the location of the movable object 20, calculated by the calculation unit 222, and the scheduled route. The control value creating unit 225 determines a target location on the scheduled route ahead of a current location of the movable object 20.

The control value creating unit 225 generates a control instruction for causing the movable object 20 to travel toward the determined target location (step S23). In the present embodiment, a control instruction includes the acceleration and steering angle of the movable object 20 as parameters. The control value creating unit 225 calculates the travel speed of the movable object 20 from changes in the location of the movable object 20 and compares the calculated travel speed with a predetermined target speed of the movable object 20. When the travel speed is lower than the target speed, the control value creating unit 225 determines the acceleration such that the movable object 20 accelerates. When the travel speed is higher than the target speed, the control value creating unit 225 determines the acceleration such that the movable object 20 decelerates. When the movable object 20 is located on the scheduled route, the control value creating unit 225 determines the steering angle such that the movable object 20 does not deviates from the scheduled route. When the movable object 20 is not located on the scheduled route, in other words, when the movable object 20 deviates from the scheduled route, the control value creating unit 225 determines the steering angle such that the movable object 20 returns to the scheduled route.

The control value creating unit 225 causes the movable object 20 to travel by controlling the drive device 220, the steering device 230, and the braking device 240 at the acceleration and the steering angle, indicated by the generated control instruction (step S24). The control value creating unit 225 repeats acquiring the location of the movable object 20, determining a target location, generating a control instruction, and controlling driving at predetermined intervals.

When the movable object 20 travels by autonomous control, it is possible to cause the movable object 20 to travel without control of the remote controller 120.

The abnormality detecting unit 123 of the remote controller 120 detects occurrence of an abnormal state in the movable object 20 as in the case of the first embodiment. In the present embodiment, when the movable object 20 in which the remote self-driving mode or the autonomous driving mode is set is traveling, the abnormality detecting unit 123 detects occurrence of an abnormal state in the movable object 20 by using movable object sensor information and movable object state information of the movable object 20, external image capture information, information indicating a communication status between the remote operating apparatus 100 and the movable object 20, and the like. The abnormal state in the movable object 20 means that the movable object 20 in which the remote self-driving mode or the autonomous driving mode is set makes an abnormal stop. An abnormal stop means an unintended stop of the movable object 20 traveling in the remote self-driving mode or the autonomous driving mode.

When the movable object 20 in which the remote self-driving mode or the autonomous driving mode is set makes an abnormal stop, the determining unit 124 determines whether to resume self-driving in the remote self-driving mode or the autonomous driving mode or switch from the remote self-driving mode or the autonomous driving mode to the remote manual driving mode.

When the movable object 20 in which the remote self-driving mode or the autonomous driving mode is set makes an abnormal stop, any one of the following handlings is performed. Handlings to be performed include (i) switching into the remote manual driving mode and remotely operating driving of the movable object 20 by driving operation of an operator, (ii) resuming self-driving in the remote self-driving mode or the autonomous driving mode, and (iii) a worker gets into the movable object 20 and the worker drives the movable object 20.

In the embodiment, when a first condition is satisfied, the determining unit 124 determines to resume self-driving of the movable object 20 in the remote self-driving mode. The first condition is a condition determined in relation to a resumption of self-driving in the remote self-driving mode or the autonomous driving mode. When the determining unit 124 determines to resume self-driving of the movable object 20 in the remote self-driving mode or the autonomous driving mode, switching of the driving mode is not performed. On the other hand, when the first condition is not satisfied, the determining unit 124 determines to switch from the remote self-driving mode or the autonomous driving mode to the remote manual driving mode. The details of the first condition related to a resumption of self-driving in the remote self-driving mode or the autonomous driving mode are similar to those of the first embodiment.

The determining unit 124 transmits notification on switching of the driving mode to the control value creating unit 125 according to a determination result as to whether to resume self-driving in the remote self-driving mode or the autonomous driving mode.

When the control value creating unit 125 receives notification from the determining unit 124 that the driving mode is not switched, the control value creating unit 125 executes control for resuming self-driving of the movable object 20 in the area of the factory while the driving mode remains in the remote self-driving mode or the autonomous driving mode. On the other hand, when the control value creating unit 125 receives notification from the determining unit 124 that the driving mode is switched to the remote manual driving mode, the control value creating unit 125 executes control over the movable object 20 to switch from the remote self-driving mode to the remote manual driving mode. As a result, self-driving of the movable object 20 in the remote manual driving mode is started.

A determining process as to switching of the driving mode is similar to that of the first embodiment (see FIG. 4B). It is assumed that in FIG. 4B, the term "remote self-driving mode" is read as "remote self-driving mode or autonomous driving mode".

As described above, in the present embodiment as well, the remote controller 120 is capable of easily determining whether a resumption of self-driving in the remote self-driving mode or the autonomous driving mode is allowed to be selected, according to whether the predetermined first condition is satisfied.

(C6) In the above-described mode (C5), the movable object 20 may be not capable of traveling in the remote self-driving mode. In this case, the movable object 20 is capable of traveling in the manned driving mode, the remote manual driving mode, and the autonomous driving mode.

(C7) In the above-described mode (C5), a detection result output from the internal sensor 280 of the movable object 20 may be used for at least one of generation of a route and generation of a traveling control signal. For example, the movable object 20 may acquire a detection result of the internal sensor 280 and reflect the detection result of the internal sensor 280 in a route at the time of generating the route. The movable object 20 may acquire a detection result of the internal sensor 280 and reflect the detection result of the internal sensor 280 in a control instruction at the time of generating the control instruction.

(C8) In the above-described mode (C5), a determination as to the first condition is performed in order to determine whether to switch the driving mode of the movable object 20 from the remote self-driving mode or the autonomous driving mode to the remote manual driving mode. Alternatively, as in the case of the second embodiment, not only a determination as to the first condition but also a determination as to the second condition may be performed in order to determine whether to switch the driving mode of the movable object 20 from the remote self-driving mode or the autonomous driving mode to the remote manual driving mode.

(C9) In the first embodiment, an example in which the movable object 20 is a battery electric vehicle has been described. However, the movable object 20 is not limited to a battery electric vehicle. The term "movable object" means an object capable of moving and is, for example, a vehicle or an electric vertically takeoff and landing machine (so-called flying vehicle). The vehicle may be a vehicle that travels by wheels, such as a passenger vehicle, a truck, a bus, a two-wheel vehicle, and a four-wheel vehicle. Alternatively, the vehicle may be a vehicle that travels by caterpillars, such as a tank and a construction vehicle. The vehicles include a battery electric vehicle, a gasoline vehicle, a hybrid electric vehicle, and a fuel cell electric vehicle. When the movable object 20 is an object other than vehicles, the expression "vehicle" in the aspect of the disclosure may be replaced with "movable object" as needed, and the expression "travel" may be replaced with "movement" as needed.

(C10) In the first embodiment, an example in which the movable object 20 adopts the steer-by-wire system, the throttle-by-wire system, and the brake-by-wire system has been described. However, in the movable object 20, a steering wheel and wheels may be connected by a mechanical structure. In the movable object 20, an accelerator pedal and a throttle valve may be connected by a mechanical structure. In the movable object 20, a brake pedal and a brake caliper may be connected by a mechanical structure.

(C11) In the above-described first embodiment, an example in which the remote controller 120 remotely operates the movable object 20 in the remote self-driving mode and the remote manual driving mode has been described. Alternatively, a device for remote self-driving to remotely operate the movable object 20 in the remote self-driving mode and a device for remote manual driving to remotely operate the movable object 20 in the remote manual driving mode may be separately prepared. In this case, another device different from the device for remote self-driving or the device for remote manual driving may determine whether to switch the driving mode. Alternatively, any one of the device for remote self-driving and the device for remote manual driving may determine whether to switch the driving mode.

(C12) A device that implements the functions of the remote controller 120 is not limited to software, and part or all of the functions may be implemented by exclusive hardware. For example, a circuit typically a field programmable gate array (FPGA) or an application specific integrated circuit (ASIC) may be used as the exclusive hardware.

(C13) In each of the above-described embodiments, the movable object 20 just needs to have a configuration movable by self-driving and may be, for example, a mode of a platform including the following configuration. Specifically, the movable object 20 just needs to include at least a movable object controller, a drive device, a steering device, and a braking device in order to exercise three functions, that is, "travel", "turn", and "stop", by self-driving. When the movable object 20 acquires information from outside sources for self-driving, the movable object 20 just needs to further include a communication device. In other words, the movable object 20 movable by self-driving does not need to be equipped with at least one or some of interior components, such as a driver seat and a dashboard, does not need to be equipped with at least one or some of exterior components, such as a bumper and a fender, and does not need to be equipped with a body shell. In this case, remaining components, such as a body shell, may be attached to the movable object 20 before the movable object 20 is shipped from the factory, or the movable object 20 may be shipped from the factory in a state where remaining components, such as a body shell, are not attached to the movable object 20 and then remaining components, such as a body shell, may be attached to the movable object 20. Components may be attached in a selected direction, that is, the upper side, lower side, front side, rear side, right side, or left side of the movable object 20, may be attached in the same direction, and may be attached in different directions. The mode of a platform can also be positioned similarly to the movable object 20 in the first embodiment.

(C14) The movable object 20 may be manufactured by a selected manufacturing method. For example, the movable object 20 may be manufactured by assembling a plurality of modules. A module means a unit made up of a plurality of components collected according to an area or function of the movable object 20. For example, the platform of the movable object 20 may be manufactured by assembling a front module that forms the front of the platform, a central module that forms the central part of the platform, and a rear module that forms a rear part of the platform. The number of modules that make up the platform is not limited to three and may be two or less or four or more. In addition to or instead of components that form the platform, a component that forms a portion different from the platform in the movable object 20 may be modularized. Various modules may include a selected exterior component, such as a bumper and a grille or a selected interior component, such as a seat and a console. Not limited to the movable object 20, a movable object according to a selected mode may be manufactured by assembling a plurality of modules. Such a module, for example, may be manufactured by joining a plurality of components through welding, with a fixture, or the like or may be manufactured by integrally molding at least one or some of components that make up a module as one component. A molding technique for integrally molding one component, particularly, a relatively large component, is called giga casting or mega casting. For example, the front module, the center module, and the rear module may be manufactured by using giga casting.

(C15) Conveying a vehicle by using travel of the vehicle by self-driving is called "self-propelled conveyance". A configuration for implementing self-propelled conveyance is called "vehicle remote control autonomous travel conveyance system. A production system that produces a vehicle by using self-propelled conveyance is called "self-propelled production". In self-propelled production, for example, at least part of conveyance of a vehicle is implemented by self-propelled conveyance in a factory that manufactures a vehicle.

## Claims

1. A controller (120) configured to control an operation of a movable object (20) that is able to travel in self-driving, the controller (120) comprising:
a detecting unit (123) configured to, when the movable object (20) is traveling in self-driving, detect occurrence of an abnormal state including an abnormal stop on the movable object (20); and
a control unit (125), wherein:
when (i) occurrence of the abnormal state is detected and (ii) a predetermined first condition is satisfied, the control unit (125) is configured to execute control to resume the self-driving of the movable object (20); and
when (i) occurrence of the abnormal state is detected and (ii) the first condition is not satisfied, the control unit (125) is configured not to execute control to resume the self-driving;
wherein:
the movable object (20) has a manned driving mode, a remote manual driving mode, and a remote self-driving mode;
the manned driving mode is a driving mode in which the movable object (20) travels when a driver in the movable object (20) operates a driver input device (210) provided in the movable object (20);
the remote manual driving mode is a driving mode in which the movable object (20) travels, by receiving a traveling condition, without the driver in the movable object (20);
the traveling condition is a condition generated when an operator operates an operator input device (110) provided in a place different from a place where the movable object (20) is, and the traveling condition defines a traveling behavior of the movable object (20);
the remote self-driving mode is a driving mode in which the movable object (20) travels, by receiving the traveling condition generated by the controller (120), without operating any of the driver input device (210) and the operator input device (110);
when (i) occurrence of the abnormal state is detected and (ii) the first condition is satisfied, the control unit (125) is configured to execute control to resume the self-driving while the driving mode of the movable object (20) remains in the remote self-driving mode; and
when (i) occurrence of the abnormal state is detected and (ii) the first condition is not satisfied, the control unit (125) is configured not to execute control to resume the self-driving in the remote self-driving mode;
wherein, when (i) occurrence of the abnormal state is detected, (ii) the first condition is not satisfied, and (iii) a predetermined second condition is satisfied, the control unit (125) is configured to switch the driving mode of the movable object (20) from the remote self-driving mode to the remote manual driving mode;
**characterised in that** the first condition includes a condition that a period of time required to resume the self-driving is shorter than or equal to a predetermined time limit.

## Patentansprüche

1. Steuerung (120), die konfiguriert ist, um einen Betrieb eines beweglichen Objekts (20) zu steuern, das in der Lage ist, selbstfahrend zu fahren, wobei die Steuerung (120) Folgendes umfasst:
eine Erfassungseinheit (123), die konfiguriert ist, um, wenn das bewegliche Objekt (20) selbstfahrend fährt, das Auftreten eines anormalen Zustands zu erfassen, einschließlich eines anormalen Stopps am beweglichen Objekt (20); und
eine Steuereinheit (125), wobei:
wenn (i) das Auftreten des anormalen Zustands erfasst wird und (ii) eine vorbestimmte erste Bedingung erfüllt ist, die Steuereinheit (125) konfiguriert ist, um Steuerung auszuführen, um das Selbstfahren des beweglichen Objekts (20) fortzusetzen; und
wenn (i) das Auftreten des anormalen Zustands erfasst wird und (ii) die erste Bedingung nicht erfüllt wird, die Steuereinheit (125) konfiguriert ist, um Steuerung nicht auszuführen, um das Selbstfahren fortzusetzen;
wobei:
das bewegliche Objekt (20) einen bemannten Fahrmodus, einen manuellen Remote-Fahrmodus und einen Remote-Selbstfahrmodus aufweist;
der bemannte Fahrmodus ein Fahrmodus ist, in dem das bewegliche Objekt (20) fährt, wenn ein Fahrer im beweglichen Objekt (20) eine Fahrereingabevorrichtung (210) bedient, die im beweglichen Objekt (20) bereitgestellt ist;
der manuelle Remote-Fahrmodus ein Fahrmodus ist, in dem das bewegliche Objekt (20) fährt durch Empfang einer Fahrbedingung, ohne den Fahrer im beweglichen Objekt (20);
die Fahrbedingung eine Bedingung ist, die generiert wird, wenn ein Bediener eine Bedienereingabevorrichtung (110) bedient, die an einem Ort bereitgestellt ist, der anders als ein Ort ist, wo sich das bewegliche Objekt (20) befindet, und die Fahrbedingung definiert ein Fahrverhalten des beweglichen Objekts (20);
der Remote-Selbstfahrmodus ein Fahrmodus ist, in dem das bewegliche Objekt (20) fährt durch Empfang der Fahrbedingung, die durch die Steuerung (120) generiert wird, ohne eine aus der Fahrereingabevorrichtung (210) und der Bedienereingabevorrichtung (110) zu bedienen;
wenn (i) das Auftreten des anormalen Zustands erfasst wird und (ii) die erste Bedingung erfüllt ist, die Steuereinheit (125) konfiguriert ist, um Steuerung auszuführen, um das Selbstfahren fortzusetzen, während der Fahrmodus des beweglichen Objekts (20) im Remote-Selbstfahrmodus bleibt; und
wenn (i) das Auftreten des anormalen Zustands erfasst wird und (ii) die erste Bedingung nicht erfüllt wird, die Steuereinheit (125) konfiguriert ist, um Steuerung nicht auszuführen, um das Selbstfahren im Remote-Selbstfahrmodus fortzusetzen;
wobei, wenn (i) das Auftreten des anormalen Zustands erfasst wird, (ii) die erste Bedingung nicht erfüllt ist und (iii) eine vorbestimmte zweite Bedingung erfüllt ist, die Steuereinheit (125) konfiguriert ist, um den Fahrmodus des beweglichen Objekts (20) vom Remote-Selbstfahrmodus zum manuellen Remote-Fahrmodus umzuschalten;
**dadurch gekennzeichnet, dass** die erste Bedingung eine Bedingung beinhaltet, dass ein Zeitraum, der erforderlich ist, um das Selbstfahren fortzusetzen, kürzer als oder gleich wie eine vorbestimmte Zeitbegrenzung ist.

## Revendications

1. Dispositif de commande (120) conçu pour commander le fonctionnement d'un objet mobile (20) capable de se déplacer de manière autonome, le dispositif de commande (120) comprenant :
une unité de détection (123) conçue pour, lorsque l'objet mobile (20) se déplace de manière autonome, détecter l'apparition d'un état anormal, dont un arrêt anormal de l'objet mobile (20), et
une unité de commande (125) ; étant entendu que :
lorsque (i) l'apparition de l'état anormal est détectée et que (ii) une première condition prédéterminée est remplie, l'unité de commande (125) est conçue pour exécuter une commande visant à reprendre la conduite autonome de l'objet mobile (20), et
lorsque (i) l'apparition de l'état anormal est détectée et que (ii) la première condition n'est pas remplie, l'unité de commande (125) est conçue pour ne pas exécuter la commande visant à reprendre la conduite autonome ;
et étant entendu que :
l'objet mobile (20) présente un mode de conduite avec conducteur, un mode de conduite manuelle à distance et un mode de conduite autonome à distance,
le mode de conduite avec conducteur est un mode de conduite dans lequel l'objet mobile (20) se déplace lorsqu'un conducteur présent dans l'objet mobile (20) actionne un dispositif d'actionnement conducteur (210) prévu dans l'objet mobile (20),
le mode de conduite manuelle à distance est un mode de conduite dans lequel l'objet mobile (20) se déplace, par réception d'une condition de déplacement, sans conducteur présent dans l'objet mobile (20),
la condition de déplacement est une condition générée lorsqu'un opérateur manie un dispositif d'actionnement opérateur (110) prévu en un emplacement différent de l'emplacement où se trouve l'objet mobile (20) et la condition de déplacement définit un comportement de déplacement de l'objet mobile (20),
le mode de conduite autonome à distance est un mode de conduite dans lequel l'objet mobile (20) se déplace par réception de la condition de déplacement générée par le dispositif de commande (120), sans actionnement du dispositif d'actionnement conducteur (210) ni du dispositif d'actionnement opérateur (110),
lorsque (i) l'apparition de l'état anormal est détectée et que (ii) la condition prédéterminée est remplie, l'unité de commande (125) est conçue pour exécuter une commande visant à reprendre la conduite autonome tandis que le mode de conduite de l'objet mobile (20) demeure le mode de conduite autonome à distance, et
lorsque (i) l'apparition de l'état anormal est détectée et que (ii) la première condition n'est pas remplie, l'unité de commande (125) est conçue pour ne pas exécuter la commande visant à reprendre la conduite autonome en mode de conduite autonome à distance,
étant entendu que, lorsque (i) l'apparition de l'état anormal est détectée, que (ii) la première condition n'est pas remplie et que (iii) une deuxième condition prédéterminée est remplie, l'unité de commande (125) est conçue pour faire basculer le mode de conduite de l'objet mobile (20) du mode de conduite autonome à distance au mode de conduite manuelle à distance ;
**caractérisé en ce que** la première condition comprend une condition selon laquelle une période nécessaire à la reprise de la conduite autonome est inférieure ou égale à une limite de temps prédéterminée.
